# EUROPEAN PATENT APPLICATION

(11) **EP 1 513 156 A1**
(43) Date of publication of application: **09.03.2005**
(21) Application number: 04000069.7
(22) Date of filing: 05.01.2004
(51) Int. Cl.: G11B 33/04

(54) **A disk storage case for a recording medium**

(30) Priority: 26.08.2003 JP 2003302132
(71) Applicant: Let's Communication Co., LTD, Tokyo (JP)
(72) Inventor: Okita, Hiroaki Let's Communications CO., LTD., Tokyo (JP)
(74) Representative: Emde, Eric

(57) **Abstract**

A disk storage case for a recording medium, comprising: a case body divided at least into two parts including a top case part and a bottom case part hinged together to assume a double-spread configuration when opened; and a holder member provided on the case part for gripping disk "D" from a diametric direction thereof, wherein said holder member is provided with a groove formed along an inner peripheral edge of a circular arc thereof for fittingly receiving an outer peripheral edge of the disk to thereby grip the disk inserted from the opening side of the circular arc by the inner peripheral edge thereof, and a window section "W" disposed in a front wall of the case body so as to allow for the disk to be inserted therethrough into the groove formed in the holder member while keeping the case in its closed state.

## Description

The present invention relates to a case that is adapted to be opened and closed for receiving therein a disk for a recording medium, such as a CD or a DVD (hereinafter simply referred to as a "disk").

A variety of disks, including CDs and DVDs, have been commonly used as recording media for video images, music and computer programs. Since these disks have employed an optical recording system, it is necessary to protect their recording surfaces, and so envelope-shaped storage jackets or storage cases are essential to them.

Among them, the latter or the storage case has a configuration in which an engaging protrusion adaptively reducible in its diameter against an elastic force is arranged within a flat case having a lid member pivotally attached thereto so as to allow its top surface to be opened, and said engaging protrusion is fittingly pressed or snapped into a center hole of the disk to thereby secure the disk in the case.

On one hand, such an invention has been suggested that allows the disk to be secured in the storage case without using the above-described engaging protrusion, as disclosed in the cited patent document 1 shown below, in which a plurality of interlocking elements (designated by reference numeral 10 in the cited document) are arranged on a holding member (designated by reference numeral 7 in the cited document), in which a disk is to be placed, along a circle corresponding to the outer periphery of the disk, and the disk is inserted between those interlocking elements and the holding member. Further, the cited non-patent document 1 shown below describes a device having a holder comprising a circular arc arm with a narrowed portion formed in an opening side thereof for gripping the disk from its diametric direction.

Patent document 1: Japanese Patent Laid-open Publication No. 2001-180780; and
Non-patent document 1: Japanese Design registration No. 1180660.

Among those prior arts, the one having the configuration allowing for the disk to be secured by means of the engaging protrusion pressed in the center hole of the disk is associated with a fear that since the center hole is used for securing the disk to the case, which is primarily provided so as to fit the disk with a spindle of a reproducing unit, repeating operations of attaching and detaching of the disk to the case could cause damage to the center hole, leading to an adverse effect on the reproduction of the content of the disk. Further, when the disk is to be taken out of the case, the disk end may be pulled upward against the press-in force onto the engaging protrusion, which causes another problem that the disk could be flexed at each attempt when it is taken out of the case.

In contrast to this, in the inventions disclosed in the cited patent document 1 and the cited non-patent document 1, the above-mentioned problem has been solved. However, the invention disclosed in the cited patent document 1 still suffers from a problem that, since the disk is inserted and thereby held between the interlocking elements and the holding member, therefore it needs a moving mechanism for preventing the disk from slipping out (the mechanism designated by reference numeral 6 in the cited document), leading to a complicated structure thereof. Further, the invention disclosed in the cited non-patent document 1 also suffers from a problem that it is difficult to carry out an operation of inserting the disk from the narrowed opening side defined by the circular arc arm having rather a small diameter to be gripped inside the arm. To add to that, disadvantageously both of the above inventions is inconvenient in that the operation for accommodating the disk into the case is allowed exclusively in a condition when the case is opened.

The present invention has been made to provide a storage case that has solved the above-described problems associated with the prior arts.

That is, a disk storage case for a recording medium according to a first aspect of the present invention comprises: a case body or a flat package provided with a space therein for containing a disk, which has been divided into a pair of case parts, each being located in a top and a bottom side of said case body, wherein said top and said bottom case parts are coupled to each other through a hinge to allow them to swing around said hinge and thus to assume a double-spread configuration when opened; and a holder member protruding from one of said case parts for gripping the disk from a diametric direction thereof, wherein said holder member is provided with a groove formed along an inner peripheral edge of a circular arc thereof for fittingly receiving an outer peripheral edge of the disk to thereby grip the disk which has been inserted from an opening side of the circular arc by the inner peripheral edge thereof, and said case further comprises a window section disposed in a front wall located in a lateral side for defining a thickness of said case body to which said opening side of the circular arc of said holder member is facing when the case is closed so as to allow for the disk to be inserted toward said opening side.

According to a second aspect of the invention, a disk storage case for a recording medium, comprises: a case body or a flat package provided with a space therein for containing a disk, which has been divided into three parts, a back plate part located in one lateral side for defining a thickness of the case body and a pair of case parts located in top and bottom sides thereof, with said top and said bottom case parts connected to said back plate part through hinges to allow them to swing around said hinges and thus to assume a double-spread configuration when opened; and a holder member protruding from said back plate part for gripping the disk from a diametric direction thereof, wherein said holder member is provided with a groove formed along an inner peripheral edge of a circular arc thereof for fittingly receiving an outer peripheral edge of the disk to thereby grip the disk which has been inserted from an opening side of the circular arc by the inner peripheral edge thereof, and said case further comprises a window section disposed in a front wall located in the other lateral side for defining a thickness of said case body to which said opening side of the circular arc of said holder member is facing when the case is closed so as to allow for the disk to be inserted toward said opening side.

In a disk storage case for a recording medium according to the first or second aspect, said window section may be covered with a closing member adapted to be pushed to open toward said holder member by an inserting pressure from the disk against a biasing force for covering said window section.

In a disk storage case for a recording medium described above, a plurality of said holder members may be provided in said storage case for receiving a plurality of disks in the storage case.

In a disk storage case for a recording medium described above, said holder member may be made up of circular arc arm having a narrowed opening side and further said holder member may be made of elastic material so that the disk being inserted from said opening side of the arm can expand the narrowed portion of the arm thereby to be fittingly received in the inner peripheral edge of the arm.

In a disk storage case for a recording medium described above, said holder member may be pivotally mounted to said one of the case parts or said back plate part so as to allow the holder member to be swung in a direction of a pivotal movement of said top and said bottom case parts while said case being opened, wherein said swing motion may be restricted within a range allowing for said holder member to keep a certain distance from said top and said bottom case parts.

Further, in a disk storage case for a recording medium stated above, a guide means may be provided on said case parts in the vicinity of said window section for guiding the peripheral edge of the disk into said groove formed in said holder member when the disk is being inserted.

The present invention provides an advantageous effect in that an inserting operation of a disk from the window section disposed in the front wall of the closed storage case can drive the disk to be advanced through the opening side of the circular arc of the holder member protruded from the top or bottom case part or the back plate opposite to the front wall and thereby into the holder to be gripped therein. In this case, since the sliding contact of the disk with the window section can restrict the inserting position of the disk, a user can correctly insert the disk into the holder member disposed in the interior of the case in a reliable manner even while keeping the case in its closed state, thus advantageously achieving a user-friendly storage case.

On one hand, when the disk is to be taken out, the case may be opened in the double-spread configuration to thereby erect the holder member protruded from the top or bottom case part or the back plate part, so that the disk can be readily picked and pulled out therefrom.

Further, since the window section may be covered with the closing member, any foreign matter can be prevented from entering the interior of the closed case, while at the same time since the disk to be inserted in the window section can push to open said closing member toward the holder member against a biasing force for covering the window section, the user can have a feeling of feedback sufficient to ensure that the inserting operation is reliably carried on.

The above and other objects, features and advantages of the present invention will become more apparent from the following description when taken in conjunction with the accompanying drawings in which the preferred embodiments of the present invention are shown by way of illustrative examples.
Fig. 1 is a perspective view of a disk storage case for a recording medium according to the present invention, illustrating a state when it is opened;
Fig. 2 is a sectional view taken along the line A-A of Fig. 1;
Fig. 3 is an exploded perspective view showing a closing member;
Fig. 4 is a perspective view of a disc storage case for a recording medium according to the present invention, illustrating a state when it is closed;
Figs. 5 through 8 are similar to Fig. 4 but partial cutaway views thereof, respectively illustrating one of the stages of a series of inserting operations of the disk;
Fig.9 and 10 are similar to Fig.2, but showing further embodiemtns of the invention; and
Fig.11 is similar to Fig.5, but showing a further embodiment of the invention.

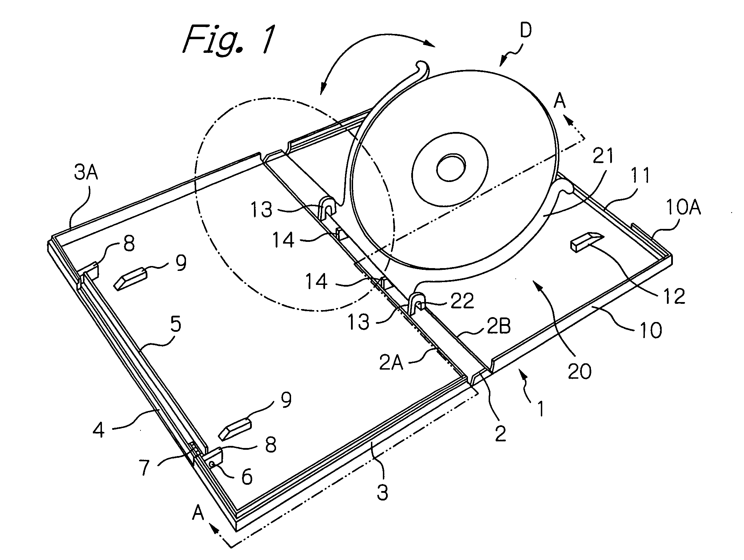

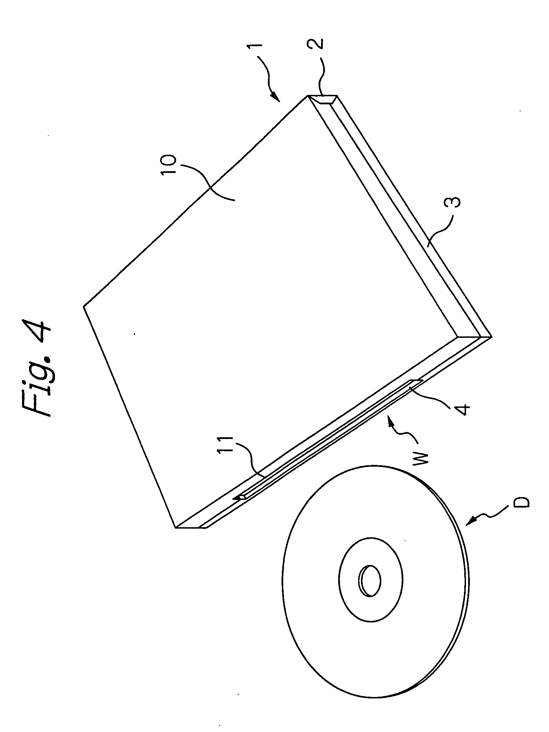

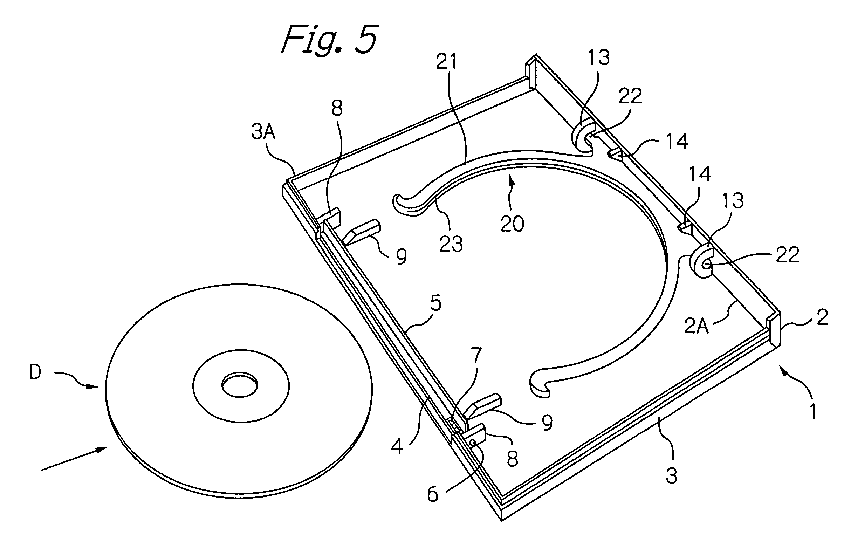

Preferred embodiments of the present invention will now be described with reference to the attached drawings. Fig. 1 shows a storage case according to the present invention in a state when it is opened, Fig. 4 shows the same storage case in a state when it is closed and Figs. 5 through 8 show the same storage case with a top case part having been omitted for illustrating the interior of the storage case in a state when it is closed.

In the drawing, reference numeral 1 designates a case body, which is constructed as a flat package provided with a space formed therein for containing a disk (in this embodiment, illustrated as a rectangular parallelopiped one), and composed of three parts, a back plate part 2 located in one lateral side for defining a thickness of the case body 1 and a pair of case parts 10 and 3 respectively located in a top and a bottom sides of the case body 1, wherein the top case part 10 and the bottom case part 3 are operatively connected to the back plate part 2 through hinges 2B and 2A so as to be movable around the hinges and thus to assume a double-spread configuration when opened. This case body 1 is, in the illustrated embodiment, made of flexible plastic into a single unit, in which a boundary between the top case part 10 and the back case part 2 and another boundary between the bottom case part 3 and the back case part 2 are formed into linear thinner portions, thus defining the hinges 2B and 2A, respectively. Further, each of the top and the bottom case parts 10 and 3 is provided with three upright walls along three sides thereof excluding the back plate 2 side so as to together form a package case when closed, in which grooves 11 and 4 defining in combination a slot or a window section, which will be described in detail later, are formed in the front walls of the top and the bottom case parts 10 and 3 respectively. It is to be noted that in this embodiment a wall type insertion portion 3A is formed along the three upright walls of the bottom case part 3 extending from an inner-side region of the upper ends of the walls, while a recessed portion 10A is formed along the three upright walls of the top case part 10 in the upper inner end portions of the walls, into which said insertion portion 3A is to be inserted when the case body is closed, whereby the top and the bottom case parts can be mated with each other in the insertion portion and the recessed portion. It is a matter of course that a means for making up an interlocking system between the top and the bottom case parts when the case body is closed may be additionally provided, though not shown.

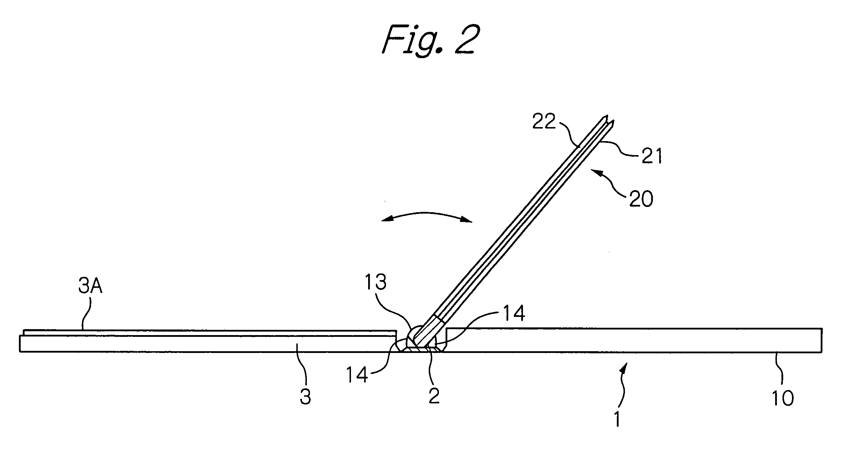

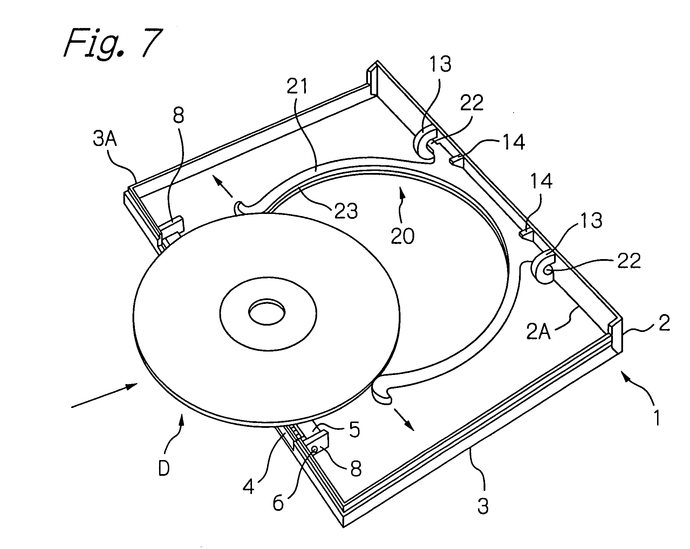

In the drawings, reference numeral 20 designates a holder member for gripping a disk "D" from its diametric direction. This holder member 20 is provided with a groove 23 formed along an inner peripheral edge of a circular arc thereof for fittingly receiving an outer peripheral edge of the disk "D" so as to provide a function for gripping the disk that has been inserted from an opening side of the circular arc by the inner peripheral edge thereof, wherein in this illustrated embodiment, the holder member is made up of circular arc having a narrowed opening or a C-shaped arm 21, and further the holder member is made of plastic having an elasticity so that disk "D" being inserted from the opening side of the arm can expand the narrowed portion of the arm thereby to be fittingly received in the inner peripheral edge of the arm (see Fig. 7). The above-described holder member 20 is protruded from the back plate part 2 of the case body 1, and in this embodiment, pivot shafts 22, 22 protruding from the opposite sides of a bottom portion of the holder member are pivotally fitted within bearings 13, 13 protruding from the back plate part so as to allow the holder member to be swung in the directions of the pivotal movement of the case parts when the case is opened. In this case, since it is inconvenient for a user to take out disk "D" if holder member 20 cannot maintain a standing position, stopper members 14, 14 are protruded from the back plate part 2 so that in case of an excessive swing motion of the holder member beyond a certain range, it may abut against said stopper members to restrict the swing motion within a range allowing for the holder member to keep a certain distance from the top and the bottom case parts (see particularly Fig. 2).

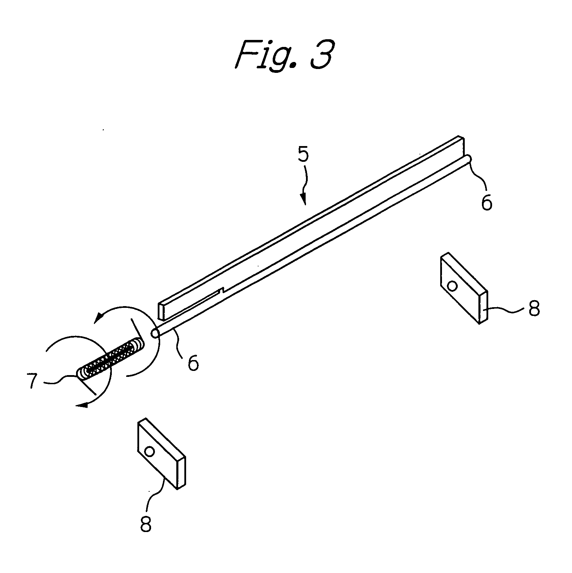

In Fig. 4, reference symbol "W" designates the window section open in the front walls of the top and the bottom case parts 10 and 3 so that disk "D" can be advanced toward the opening side of the circular arc of said holder member 20 while keeping case body 1 in its closed state, wherein window section "W" is defined by groove 11 formed in the front wall of top case part 10 and groove 4 formed in the front wall of bottom case part 3. Reference numeral 5 in the drawing designates a closing member arranged behind said window section "W". Closing member 5 has a shape capable of covering window section "W" in which pivot shafts 6, 6 protruding from the opposite sides thereof is pivotally fitted in bearings 8, 8 protruding from bottom case part 3 to thereby operatively support window section "W" so as to be swingable in the opening and closing direction thereof. In this case, a torsion spring 7 is fitted around pivot shaft 6 in order to bias closing member 5 in the closing direction of window section "W" (see Fig. 3).

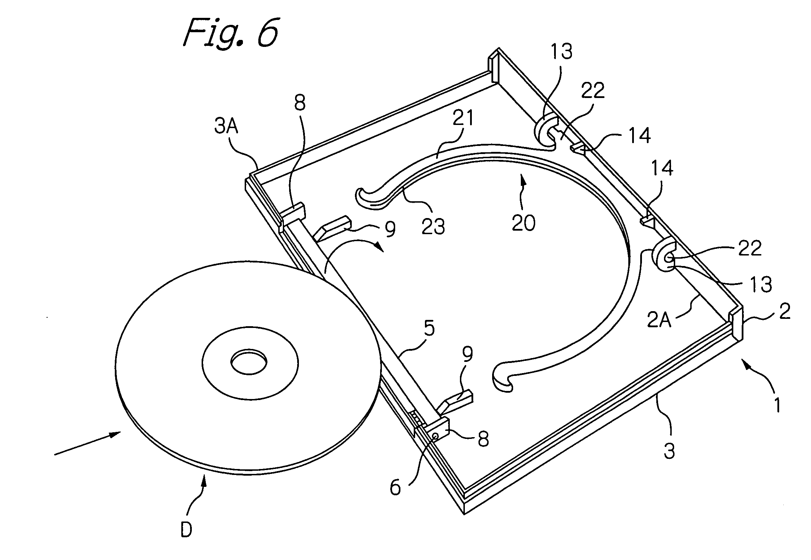

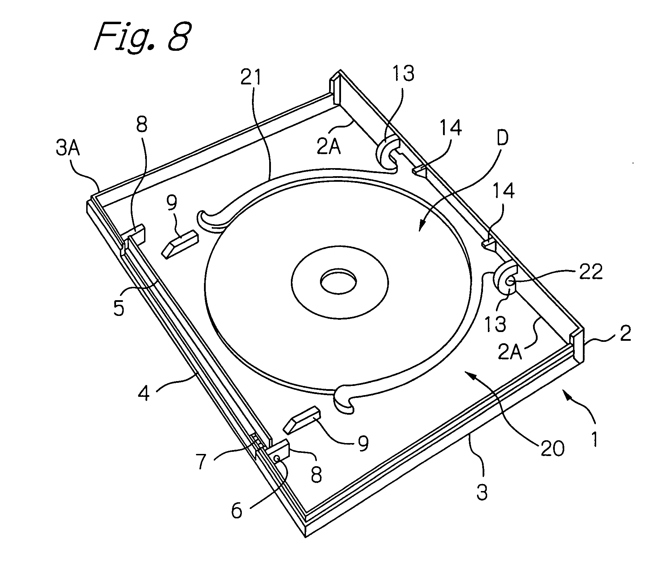

The disk storage case for a recording medium having the above configuration can be used in the following manner.
(1) Disk "D" is going to be inserted into the case body from window section "W" located in the front of the case body while keeping the case in its closed state (see Fig. 4 and Fig. 5).
(2) As disk "D" is inserted, closing member 5 covering window section "W" is associatively pushed down by the peripheral edge of the disk "D" (see Fig. 6). It is to be noted that in this illustrated embodiment, sliding guide rails 12, 9 are protruded from the top and bottom case parts 10, 3 respectively, so as to prevent the disk that has passed through window section "W" from being shifted upward or downward and to guide the disk toward groove 23 formed in holder member 20.
(3) Further insertion of disk "D" causes the narrowed portion of the arm of holder member 20 to be expanded and thereby the disk is fittingly inserted into the inner peripheral edge of the arm and further into groove 23 formed in holder member 20(see Fig. 7).
(4) After the completion of the fitting insertion, disk "D" is prevented from escaping toward the opening of holder member 20 with the aid of the narrowed portion of the arm (see Fig. 8).
(5) When case body 1 is opened into the double-spread configuration, holder member 20 with the disk gripped therein stands up on back plate part 2 of case body 1, so that under this state, disk "D" can be pulled out of holder member 20. In this case, since the holder member is capable of swinging forward and backward, it can be tilted to a position allowing for the disk to be pulled out easily.

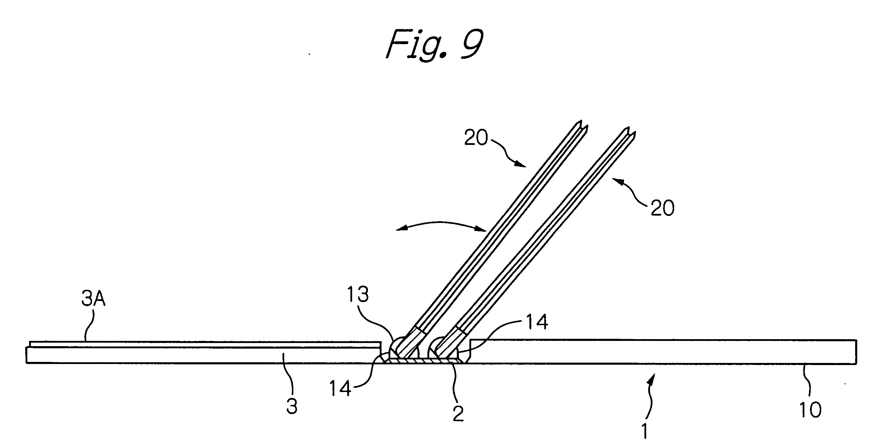

Incidentally, in the embodiment shown above, although a single holder member 20 is provided within a disk storage case, a plurality of holder members 20 may be provided as shown in Fig.9 so as to receive and store a plurality of disks within the disk storage case.

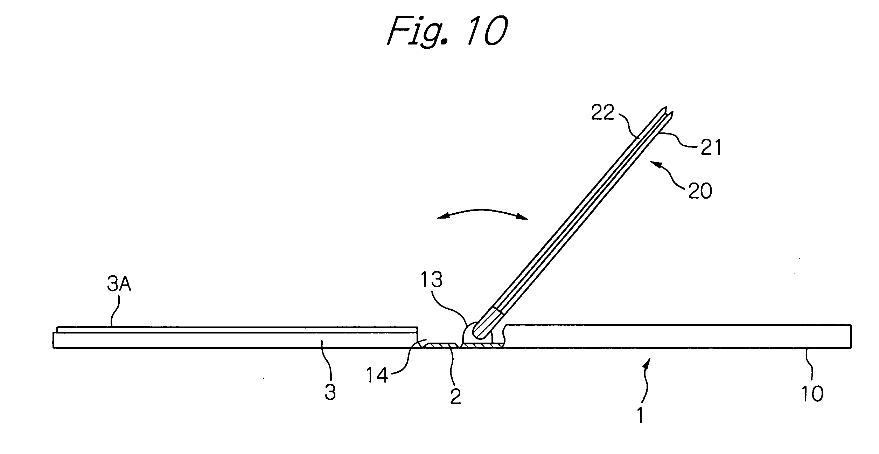

Also, in the aforementioned embodiment, although a holding member is provided on the back plate part, the holding member 20 may be provided on the top case part or the bottom case part as shown in Fig.10.

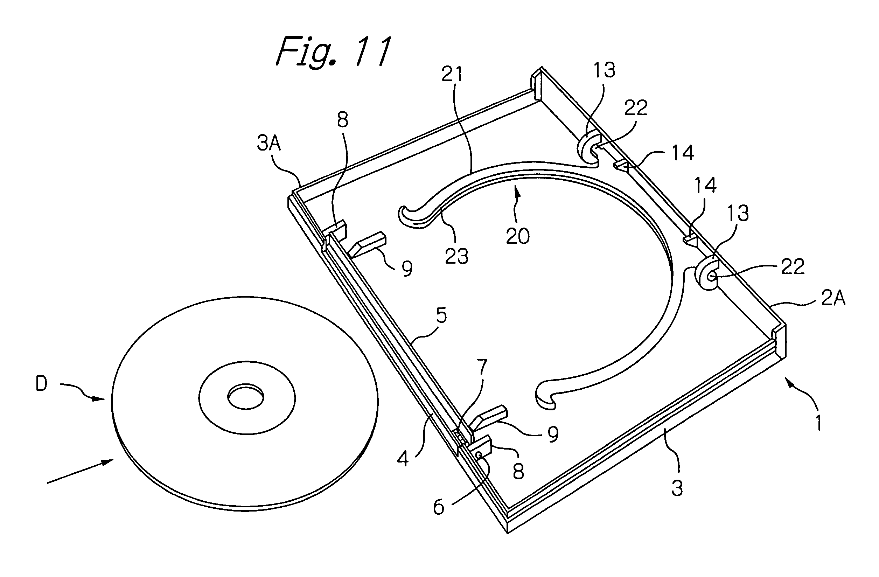

Further, in the aforementioned embodiment, a case body is divided into three parts, i.e. a back plate part, a top case part and a bottom case part, it is possible to divide the case body into two parts, i.e. a top case part and a bottom case part which are hinged together. In such a case, a back plate part is integrally formed with the top case part or the bottom case part and the holding member can be provided on the top case part or the bottom case part as shown in Fig.11.

## Claims

1. A disk storage case for a recording medium, comprising:
a case body or a flat package provided with a space therein for containing a disk, which has been divided into a pair of case parts, each being located in a top and a bottom sides of said case body, wherein said top and said bottom case parts are coupled to each other through a hinge to allow them to swing around said hinge and thus to assume a double-spread configuration when opened; and
a holder member protruding from one of said case parts for gripping the disk from a diametric direction thereof, wherein
said holder member is provided with a groove formed along an inner peripheral edge of a circular arc thereof for fittingly receiving an outer peripheral edge of the disk to thereby grip the disk which has been inserted from an opening side of the circular arc by the inner peripheral edge thereof, and
said case further comprises a window section disposed in a front wall located in a lateral side for defining a thickness of said case body to which said opening side of the circular arc of said holder member is facing when the case is closed so as to allow for the disk to be inserted toward said opening side.

2. A disk storage case for a recording medium, comprising:
a case body or a flat package provided with a space therein for containing a disk, which has been divided into three parts, a back plate part located in one lateral side for defining a thickness of the case body and a pair of case parts located in a top and a bottom sides thereof, with said top and said bottom case parts connected to said back plate part through hinges to allow them to swing around said hinges and thus to assume a double-spread configuration when opened; and
a holder member protruding from said back plate part for gripping the disk from a diametric direction thereof, wherein
said holder member is provided with a groove formed along an inner peripheral edge of a circular arc thereof for fittingly receiving an outer peripheral edge of the disk to thereby grip the disk which has been inserted from an opening side of the circular arc by the inner peripheral edge thereof, and
said case further comprises a window section disposed in a front wall located in the other lateral side for defining a thickness of said case body to which said opening side of the circular arc of said holder member is facing when the case is closed so as to allow for the disk to be inserted toward said opening side.

3. A disk storage case for a recording medium in accordance with claim 1 or 2, in which said window section is covered with a closing member adapted to be pushed to open toward said holder member by an inserting pressure from the disk against a biasing force for covering said window section.

4. A disk storage case for a recording medium in accordance with any one of claims 1 through 3, in which a plurality of said holder members is provided in said storage case.

5. A disk storage case for a recording medium in accordance with any one of claims 1 through 4, in which said holder member is made up of circular arc arm having a narrowed opening side and further said holder member is made of elastic material so that the disk being inserted from said opening side of the arm can expand the narrowed portion of the arm thereby to be fittingly received in the inner peripheral edge of the arm.

6. A disk storage case for a recording medium in accordance with any one of claims 1 through 5, in which said holder member is pivotally mounted to said one of the case parts or said back plate part so as to allow the holder member to be swung in a direction of a pivotal movement of said top and said bottom case parts while said case being opened, wherein said swing motion is restricted within a range allowing for said holder member to keep a certain distance from said top and said bottom case parts.

7. A disk storage case for a recording medium in accordance with any one of claims 1 through 6, further comprising a guide means formed on said case parts in the vicinity of said window section for guiding the peripheral edge of the disk into said groove formed in said holder member when the disk is being inserted.
